# EUROPEAN PATENT SPECIFICATION

(11) **EP 0 646 903 B1**
(45) Date of publication and mention of the grant of the patent: **03.05.2000**
(21) Application number: 94830278.1
(22) Date of filing: 07.06.1994
(51) Int. Cl.: G09B 19/00, A44C 23/00

(54) **An apparatus for guiding to the saying and meditation of the rosary**
Weiser für das Beten des Rosenkranzes und die Meditation über ihn
Dispositif pour guider les croyants dans les prières et la méditation du rosaire

(30) Priority: 10.06.1993 IT RM930116 U
(43) Date of publication of application: 05.04.1995
(73) Proprietor: ITALTED - S.r.l., Roma (IT)
(72) Inventor: Bosmani, Stefano, I-00040 Pomezia, Roma (IT)
(74) Representative: Gristina, Giorgio

(56) References cited:
- FR-A- 2 505 631
- FR-A- 2 515 949
- FR-A- 2 648 330
- GB-A- 2 250 371
- US-A- 3 806 911
- US-A- 4 601 584
- US-A- 5 239 988

## Description

The present invention relates to an apparatus for guiding the believer to prayer.

More specifically, it relates to an apparatus for guiding to the saying and meditation of the rosary.

As is known, the rosary is a prayer in the honour of the Virgin Mary that consists in saying a hundred and fifty Hail Mary, divided in fifteen tens intercalated with the saying of the Lord's Prayer and the Gloria. At each ten one keeps meditating on one of the fifteen Mysteries of Redemption. These consist in events of Gospel history and are divided in three series regarding Jesus' and Mary's Joy (Joyful Mysteries), Sorrow (Sorrowful Mysteries) and Gloria (Glorious Mysteries).

The Joyful Mysteries are the Annunciation, the Visitation, Jesus' birth, the Virgin's Purification, Jesus's finding among the Scribes. The Sorrowful Mysteries are the Agony, the Flagellation, the Crowning with thorns, the Trip to the Calvary, the Crucifixion and death. The Glorious Mysteries are Jesus' Resurrection, the Ascension to Heaven, the descent of the Holy Ghost, Mary's Assumption, her Crowning.

The essence and the merit of this prayer are in joining mental prayer and vocal prayer together.

As far back as antiquity and in the most disparate cultures, besides prayer books means for assisting the believer in the prayer are known. For instance there are plates bearing series of images, each one associated with a different step of a prayer.

In the saying of the Rosary, due to its complexity relative, to other prayers, a means was created and is still commonly used at the present day - particularly portable for the personal use in any place - for counting the Hail Mary and the Lord's Prayer, made up of a crown chain wherein groups of ten beads or minor grain, which serve for the Hail Mary, are fixed, each one intercalated with a bead or major grain, which serves for the Lord's Prayer.

This crown is itself named rosary for metonymy. It represents, with its grains, the third part of the rosary, the saying of three Hail Mary corresponding with each grain. The rosary in a reduced form can also be said limitedly to sucha third part, it also commonly named rosary, in which case a single Hall Mary corresponds with each grain.

In order to provide a Rosary that overcomes an inconvenience or impossibility in manipulating rosary beads, and in which the prayer step recited the last is memorized, United States Patent No. 4,601,584 (referred to as D1 hereinafter), issued to DeWolf *et al*. on July 22, 1986, teaches an electrically energizable rosary apparatus having a face structure and means for turning it ON/OFF, including in combination energizable means having terminals proximate the face structure, the terminals defining a loop or a portion of a loop; control means for controllably energizing the energizable means, so that the terminals are successively and controllably made visible by a believer, certain of said terminals when visible having a first characteristic indicative of a Hail Mary prayer, and others of said terminals when visible having a second characteristic indicative of an Our Father prayer, the control means including a switch.

So in D1 an electro-mechanical Rosary is dealt with, which visually indicates the successive steps - corresponding to the beads of a usual, crown Rosary - of Rosary prayers, in response to simple manual activation.

Both the usual crown rosary and D1's electro-mechanical one have the disadvantage of reminding the believer the various steps of the prayer in a vague way only. They are simple counter means for remembering where one finds himself in the reciting of the prayer.

In fact, apart from the fact of memorizing the prayer step recited the last (storing it when in its state of being turned on), still in D1 the concept really is that of presenting a semasiographical representation of the rosary, wherein each bead is represented by a light emitting element. Each one of the latter, so, is able to only symbolically univoquely identify a passage or step of the rosary not *per se*, but only in conjunction with the position it occupies in the representation of the rosary. So, the information it gives a believer when it turns on, is only that of informing the latter about the step which he/she has arrived at - not about what it is to be said - not differently from a usual rosary in this connection.

The object of the present invention is to provide a means that guides a believer step-by-step in the saying and the meditation of the Rosary prayer in a substantially more precise and suggestive way.

Another object of the present invention is to provide such a means, that is easy and convenient to be born on oneself and to be utilized as a personal apparatus.

Such objects are reached with an apparatus that displays the various steps of the Rosary one at a time through self-explicatory messages, endowed with a mechanism for sequentially advancing the steps themselves upon the believer's command.

For such an apparatus the construction with electronic hardware is particularly provided.

This has the double advantage of a low cost and of a versatility of the apparatus itself. Based upon the electronic hardware, the displaying of the various steps of the Rosary can be concretely carried out in both an optical manner on a video screen, and an acoustical manner through a voice synthesizer.

The visual displaying is in turn susceptible of various embodiments, both alfa-numerical and graphical.

For the apparatus the realization under the form of a box in pocket-size or anyhow portable is particularly envisaged, that offers the advantage that a believer is able with it to profitably employ, praying, a few minutes also of his free time in any place he finds itself.

The electronic minaturization allows in this connection executions to very reduced sizes.

Therefore, the present invention relates to an electrically energizable Rosary apparatus, having means for turning it on/off,
characterized in that it includes in combination:
presentation means for presenting a message self-explicatorily identifying a step of Rosary's prayer, for guiding a believer to the saying of a step of Rosary's prayer;
memory means for storing Rosary's prayer step-identifying messages, each one for a respective Rosary's prayer step, for all the steps of Rosary's prayer;
key means manually controllable by a believer, for advancing the presentation of said Rosary's step-identifying messages, and
microprocessor means, operatively connected with said presentation means, memory means and key means, programmed for making said presentation means to present said Rosary's prayer step-identifying messages sequentially, according to the order of the steps of Rosary's prayer, under succesive activations of said key means by the believer, fetching them from said memory means.

Advantageously, the electrically energizable rosary apparatus of the present invention further includes a random access memory for the nonvolatile storage of a Rosary's prayer step-identifying message presented the last before the apparatus itself is turned off, said microprocessor means being so programmed that when the apparatus is turned on again, it makes said presentation means to present this rosary's prayer step-identifying message the first.

It is envisaged that in the electrically energizable rosary apparatus of the present invention said presentation means are made up of a video display.

It is also envisaged that the electrically energizable rosary apparatus of the present invention is made up of a vocal synthesizer.

It is particularly envisaged that said video display is an alphanumerical display.

It is further particularly envisaged that said alphanumerical display is a liquid crystal display.

It is also further envisaged that said video display is a graphical display.

It is, moreover, envisaged that an electrically energizable rosary apparatus of the present invention further includes a group of ten light emitting diodes for indicating the ten Hail Mary and other three light emitting diodes for indicating the group of Mysteries at their turning on, under the control of said microprocessor means.

The present invention also relates to an electrically energizable rosary apparatus as set forth above,
further including means for emitting musical religious motives accompanying the various single steps of rosary's prayer, controlled by said microprocessor means.

It is particularly envisaged that said means for emitting musical religious motives are made up of a piezoelectric buzzer.

The present invention will be best understood based upon the following detailed disclosure of preferred embodiment thereof, given only as a matter of example, absolutely not of restriction, with reference to the annexed drawings, wherein:
- Figure 1 represents a pictorial view of an embodiment of the apparatus of the present invention;
- Figure 2 represents a pictorial view of an apparatus of the present invention endowed with visual reference LED's, and
- Figure 3 represents the hardware architecture to make the apparatus of the present invention to perform its functions.

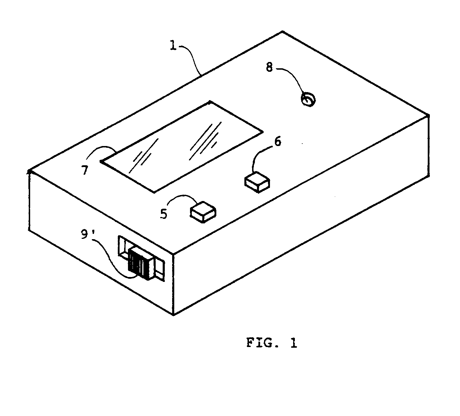

As can be seen in Figure 1, the apparatus of the present invention shows itself as a pocket plastic box, indicated with the general numeral 1.

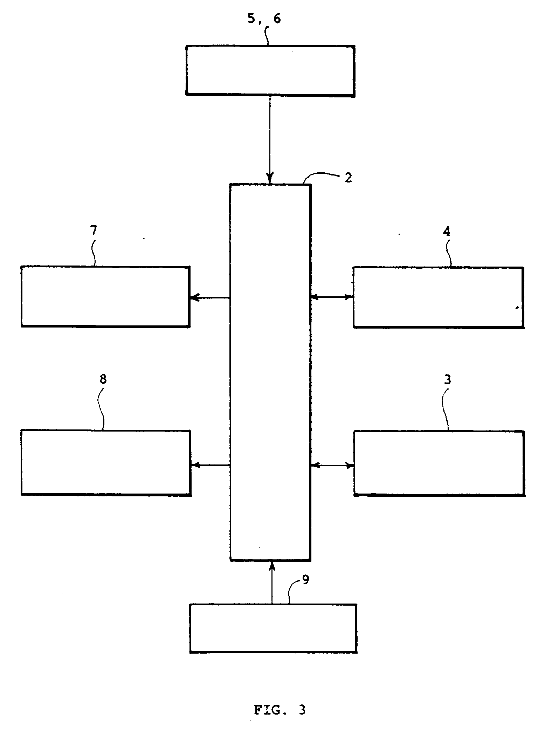

Such a plastic box contains the electronic hardware represented in Figure 3. It comprises a 4- or 8-bit microprocessor 2, which addresses 8 kilobytes of an erasable programmable read only memory or EPROM 3 and some hundreds bytes of a random access memory or RAM 4.

Microprocessor 2 manages two keys 5 and 6, diversified with green and red colours, a liquid crystal alphanumerical video display of two (2) rows by sixteen (16) characters 7 and a piezoelectric buzzer 8.

The power supply of the apparatus is provided by storage batteries or accumulators 9, for a value of 6 volts with a consumption of about 50 milliampères.

The hardware is endowed with means (not shown) for supplying the RAM 4 with the apparatus turned off too, so allowing the data in the memory to be preserved.

Based upon such a hardware all the various steps of the rosary are shown alphanumerically on the video display 7 (visual displaying means) through the two keys 5 and 6 (means for advancing the displaying); the piezoelectric buzzer 8 emits short religious motives fit for stressing the most important passages among the various prayers to the believer.

After turning the apparatus on, one has the following operation sequence:

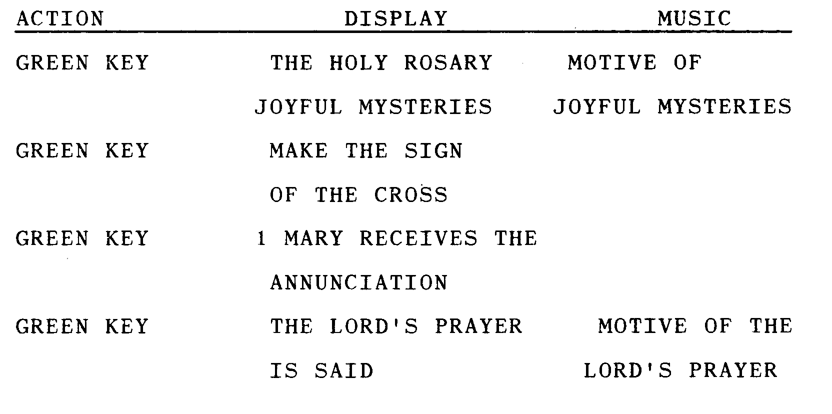

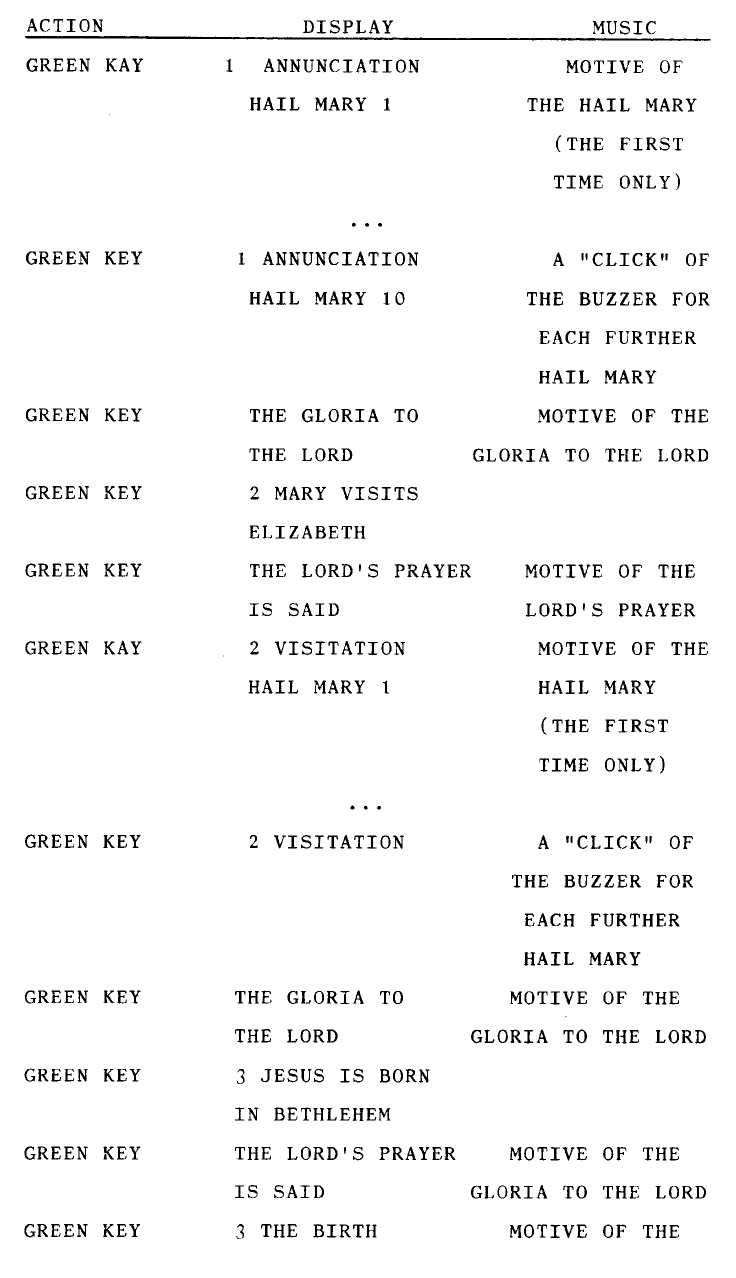

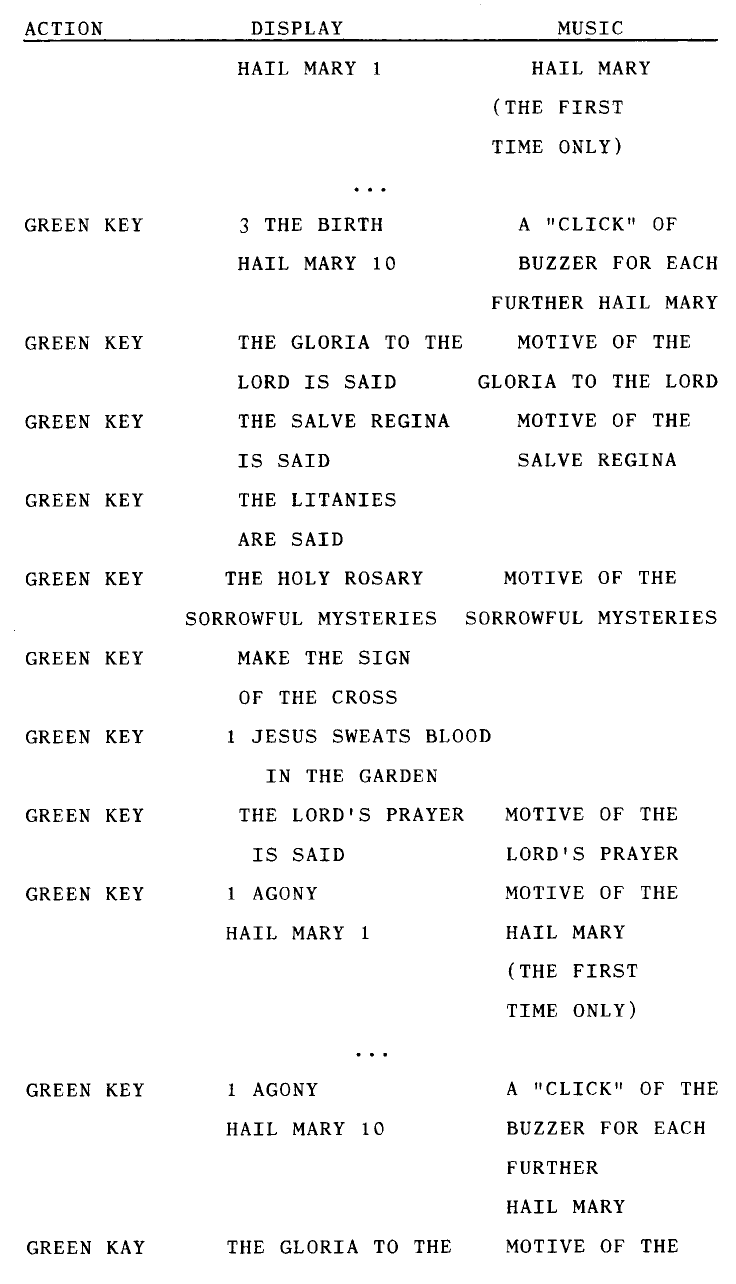

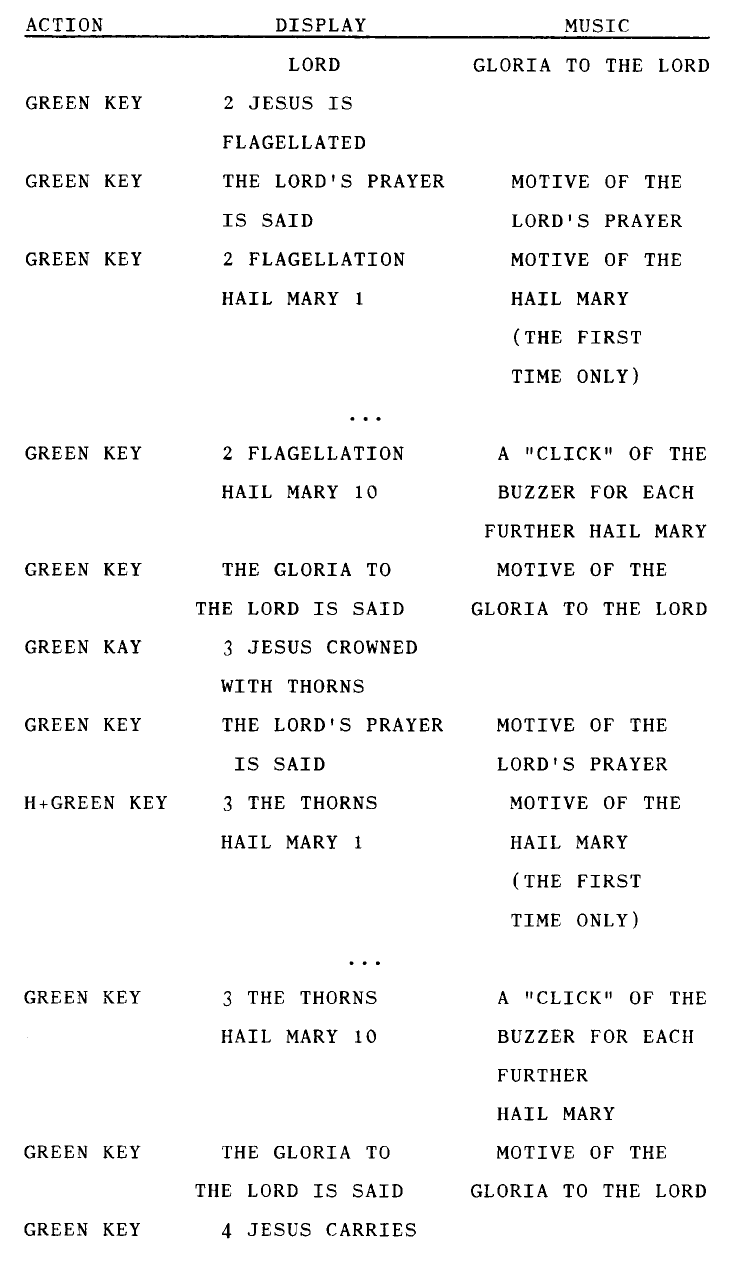

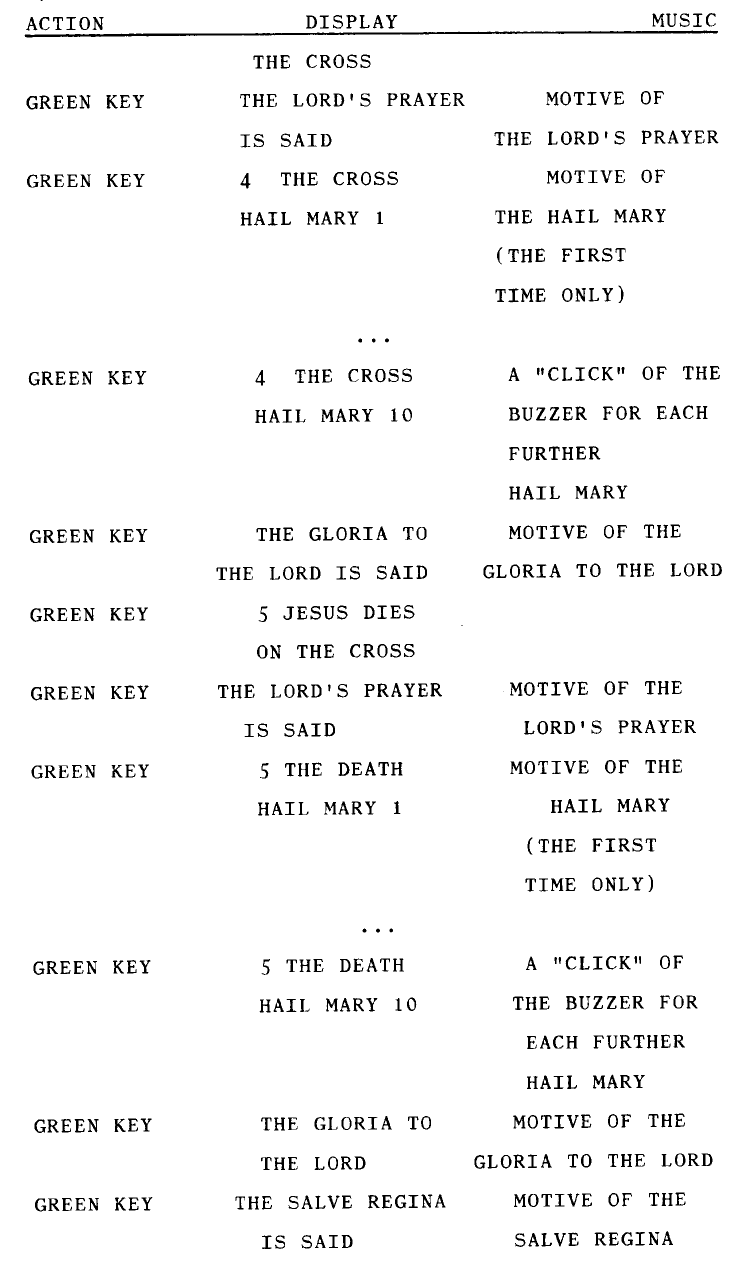

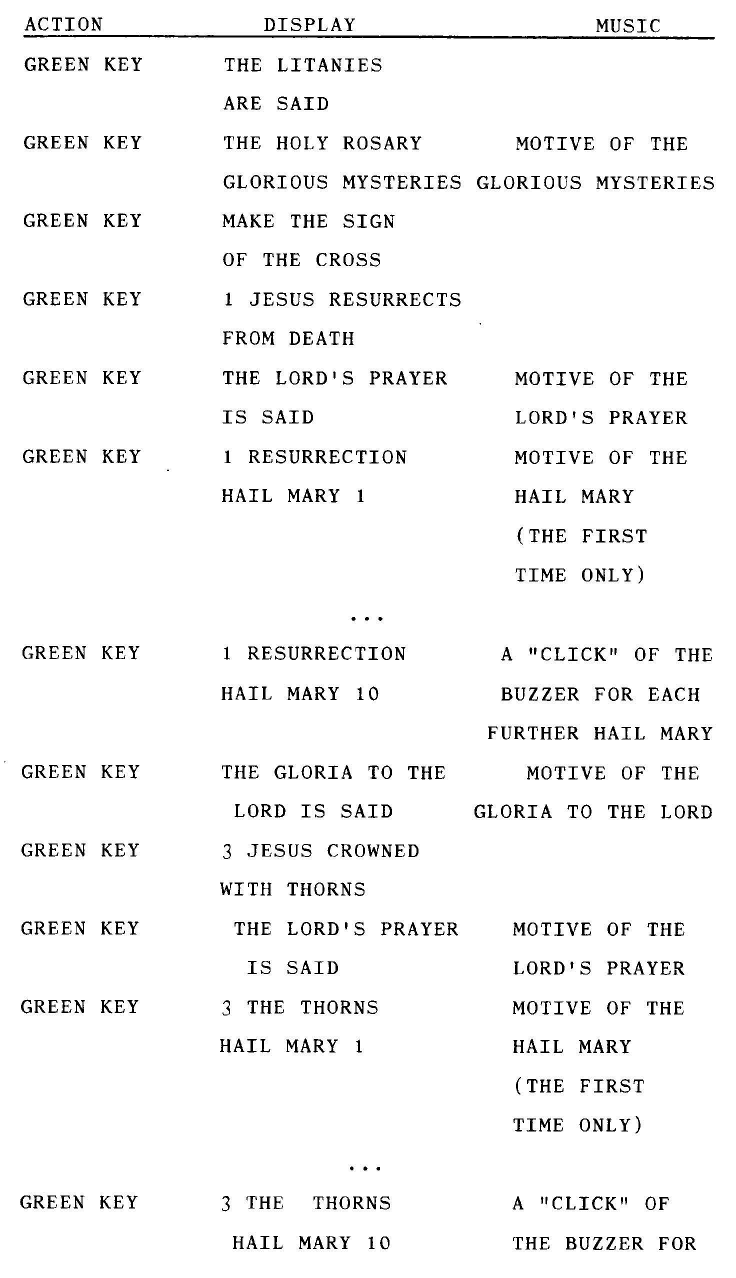

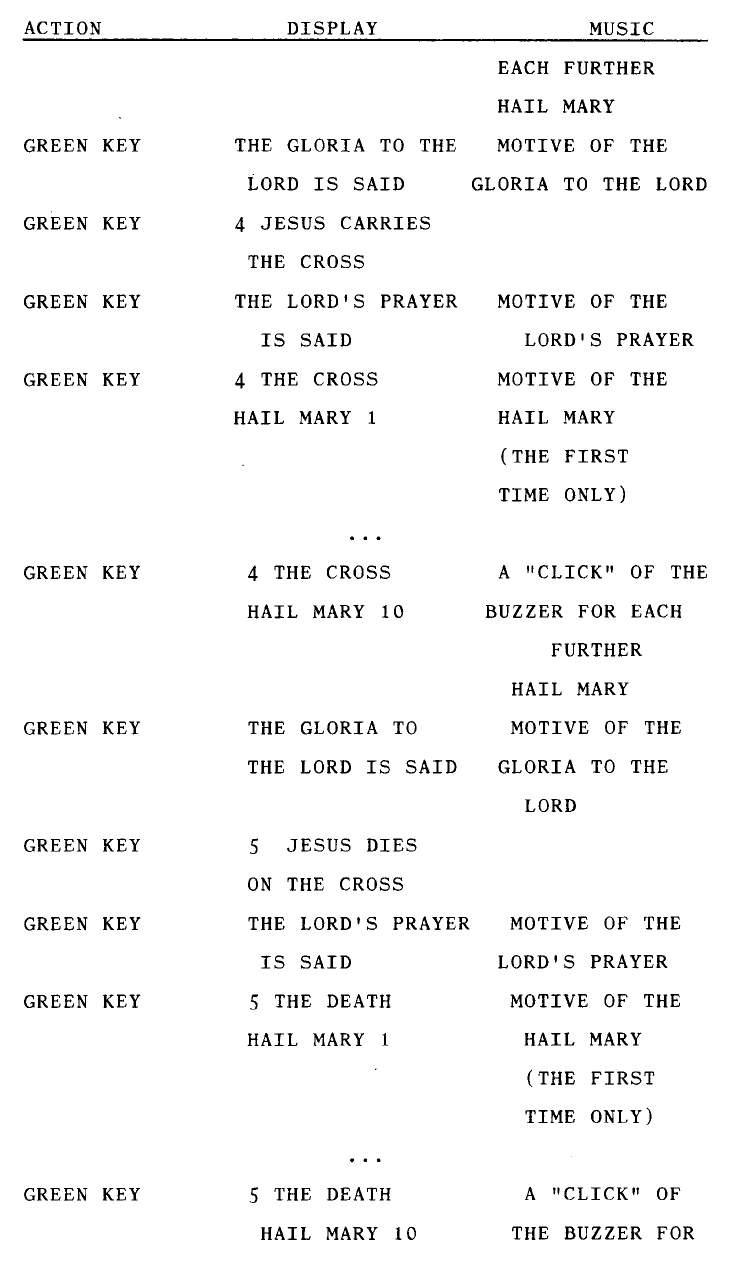

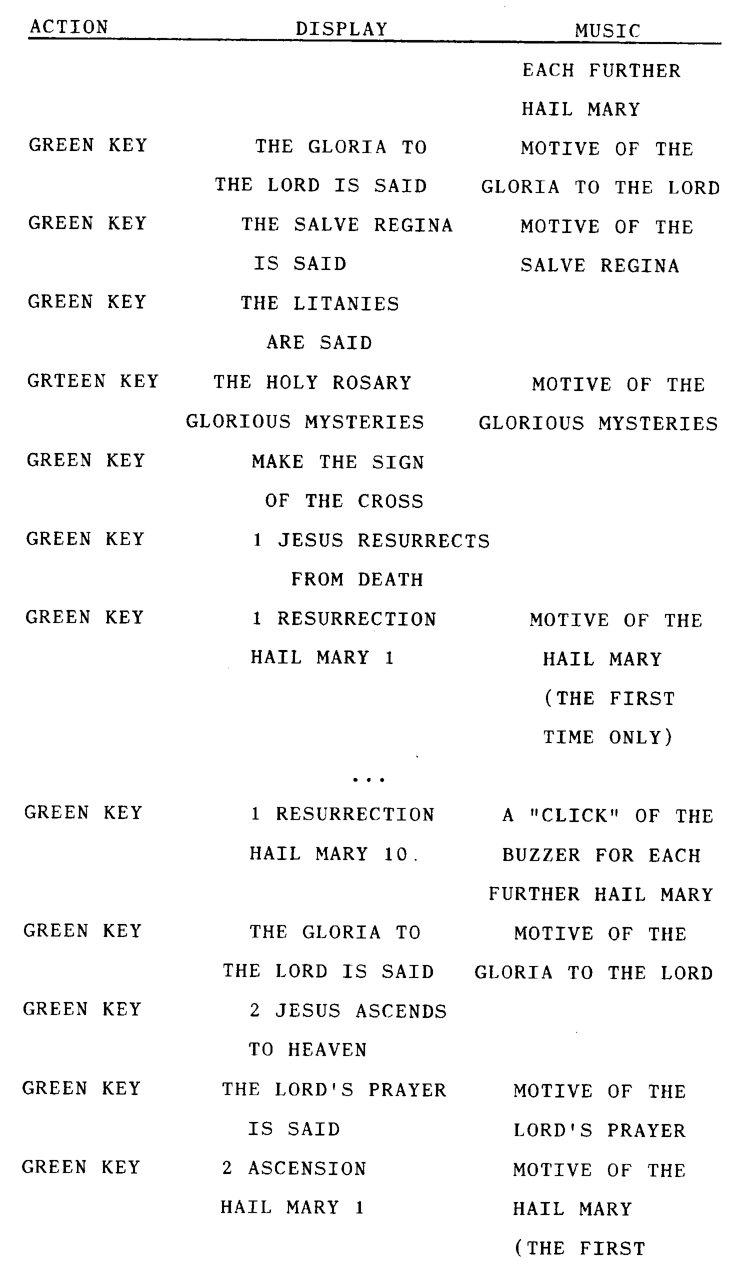

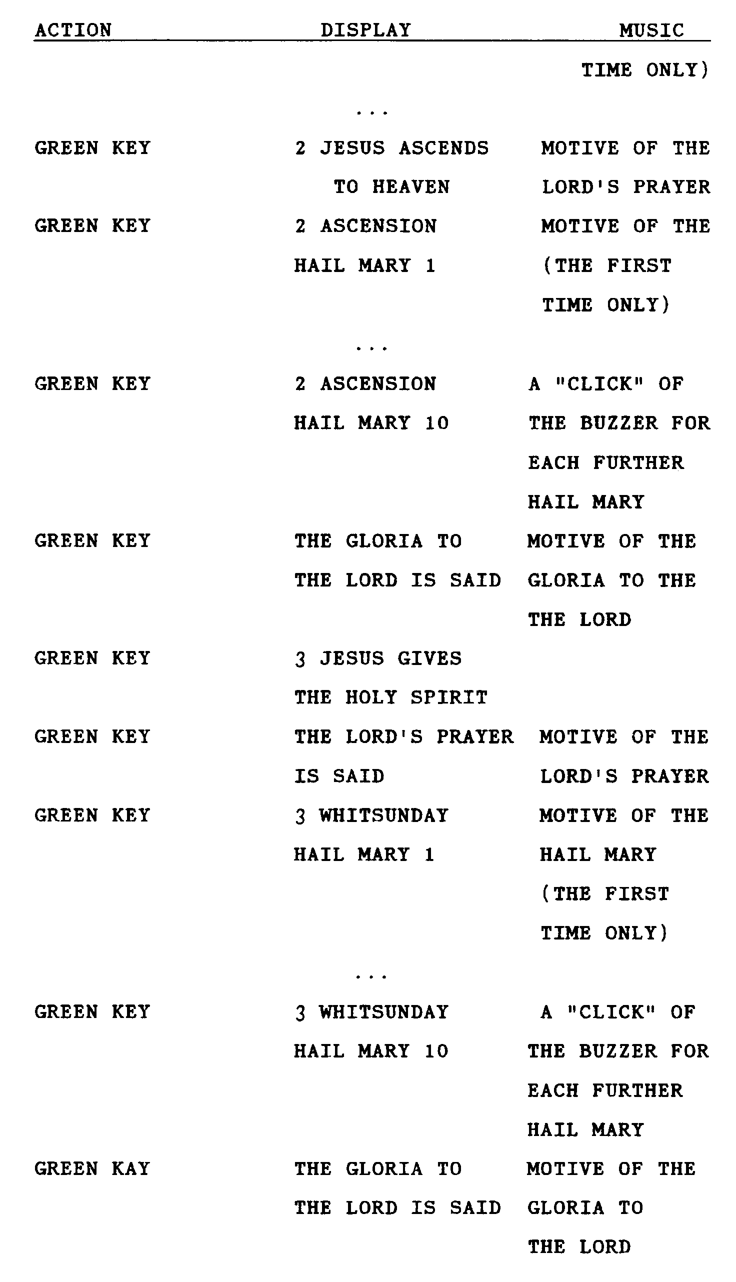

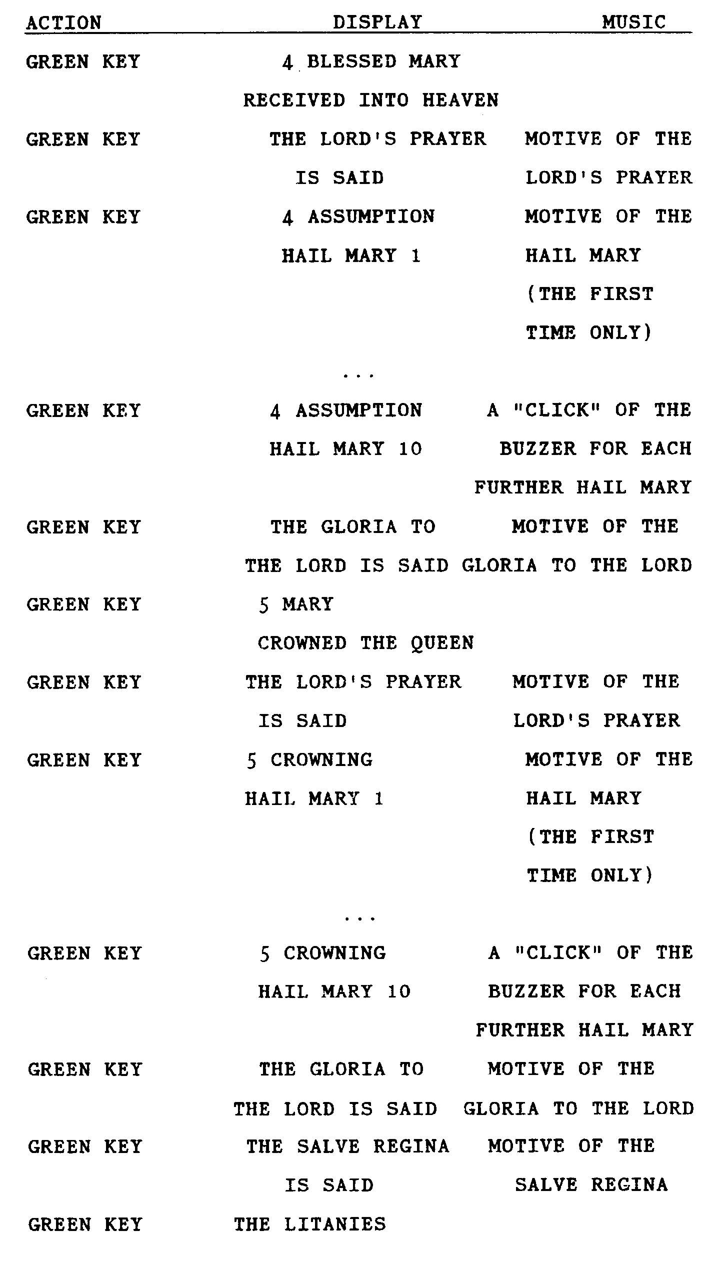

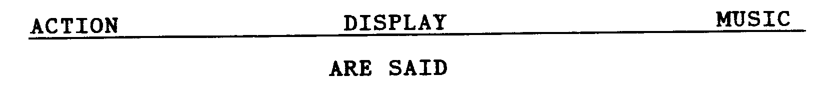

From this point, by keeping on pressing the green key, one can start again from the beginning.

On the contrary, by pressing the red key anywhere one finds itself in the rosary, one can select which group of mysteries to recite, in the following order:

| ACTION | DISPLAY | MUSIC |
|---|---|---|
| RED KEY | THE HOLY ROSARY JOYFUL MYSTERIES | MOTIVE OF THE JOYFUL MYSTERIES |
| RED KEY | THE HOLY ROSARY SORROWFUL MYSTERIES | MOTIVE OF THE SORROWFUL MYSTERIES |
| RED KEY | THE HOLY ROSARY GLORIOUS MYSTERIES | MOTIVE OF THE GLORIOUS MYSTERIES |

Turning the apparatus off and then having to interrupt the prayer, upon returning the apparatus on, the believer will not have to restart from the beginning or remeber where he was arrived, but the display will reposition itself automatically in the interrupt point.

The displaying of the messages can be provided in any desidered tongue.

According to a variant of such an embodiment, graphical messages are substituted for the alphanumerical messages, on a larger displaying array, which can offer a suggestive result advantage.

Variants are envisaged having the two display forms in combination.

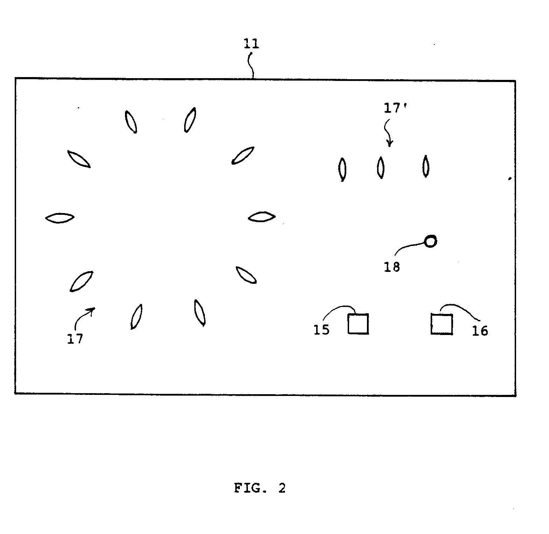

With reference to figure 2 another embodiment is disclosed of the apparatus of the present invention. Elements thereof corresponding with those of the embodiment of Figure 1 are designated with the same numerals increased by ten. It presents itself equal to the apparatus of Figure 1, with a small, pocket plastic box 11 and with the electronic hardware shown in Figure 3, except that in the place of the alphanumerical displaying disclosed a group of light emitting diodes or LED's 17 (visual display means) for the ten Hail Mary and other 3 LED's 17' (visual display means) for indicating the group of mysteries that one keeps meditating, keeping the musical motives unaltered.

In this case a Hail Mary or a Mystery is represented by the turning on of one of the relevant LED's.

In this embodiment too the advancement commands are imparted through two keys 15 and 16 (means for advancing the display), with the same execution modality. In the place of the visual displaying an acoustical presentation is provided, by endowing the hardware disclosed with reference to Figure 3 with a vocal synthesizer that vocally recites the messages.

The eventual combination of the two presentations, the visual and the acoustical ones, with the microprocessor that controls both a video display and a vocal synthesizer, is also envisaged.

Summing up, a religious use apparatus has thus been realized, which especially for modern youth turns out to be in synthony with today's technological development whereto the new generations are accustomed since from children.

The present invention has been disclosed with reference to preferred embodiments thereof, but it is to be expressedly understood that variations, additions and/or omissions can be made thereto, without so departing from its protection scope, as defined by the appended claims.

### List of the numerals

- 1:: pocket plastic containing box;
- 2:: microprocessor;
- 3:: EPROM;
- 4:: RAM;
- 5, 6:: advancing keys;
- 7:: display;
- 8:: piezoelectric buzzer;
- 9:: battery; 9': turning on switch;
- 11:: pocket plastic containing box;
- 15, 16:: advancing keys;
- 17:: LED's group for the ten Hail Mary;
- 17':: LED's group for the three Mysteries.

## Claims

1. An electrically energizable rosary apparatus, having means for turning it on/off,
characterized in that it includes in combination:
presentation means (7; 17, 17') for presenting a message self-explicatorily identifying a step of Rosary's prayer, for guiding a believer to the saying of a step of Rosary's prayer;
memory means (3, 4) for storing Rosary's prayer step-identifying messages, each one for a respective Rosary's prayer step, for all the steps of Rosary's prayer;
key means (5, 6; 15, 16), manually controllable by a believer, for advancing the presentation of said Rosary's step-identifying messages, and
microprocessor means (2), operatively connected with said presentation means, memory means and key means, programmed for making said presentation means to present said Rosary's prayer step-identifying messages sequentially, according to the order of the steps of Rosary's prayer, under succesive activations of said key means by the believer, fetching them from said memory means.

2. The electrically energizable rosary apparatus of Claim 1, further including a random access memory for the nonvolatile storage of a Rosary's prayer step-identifying message presented the last before the apparatus itself is turned off,
said microprocessor means (2) being so programmed that when the apparatus is turned on again, it makes said presentation means to present this rosary's prayer step-identifying message the first.

3. The electrically energizable rosary apparatus of Claim 1,
wherein said presentation means are made up of a video display (7).

4. The electrically energizable rosary apparatus of Claim 1,
wherein said presentation means are made up of a vocal synthesizer.

5. The electrically energizable rosary apparatus of Claim 3,
wherein said video display is an alphanumerical display.

6. The electrically energizable rosary apparatus of Claim 5, wherein said alphanumerical display is a liquid crystal display.

7. The electrically energizable rosary apparatus of Claim 3,
wherein said video display is a graphical display.

8. The electrically energizable rosary apparatus of Claim 1,
further including
a group of ten light emitting diodes (17) for indicating the ten Hail Mary and other three light emitting diodes (17') for indicating the group of Mysteries at their turning on, under the control of said microprocessor means.

9. The electrically energizable rosary apparatus of Claim 1,
further including means for emitting musical religious motives accompanying the various single steps of rosary's prayer, controlled by said microprocessor means.

10. The electrically energizable rosary apparatus of Claim 9,
wherein said means for emitting musical religious motives are made up of a piezoelectric buzzer (8).

## Patentansprüche

1. Netzbetriebenes Gerät zum Beten vom Rosenkranz, das ein Ein- und Ausschaltungsmittel aufweist, dadurch gekennzeichnet, daß die folgenden kombinierten Mittel enthalten sind:
ein Ausgabemittel (7; 17, 17') zum Ausgeben von einer selbsterklärenden Meldung, die ein Gesetz des Rosenkranzgebets zur Führung der Gläubigen zum Sprechen von einem Rosenkranzgesetz darstellt;
ein Speichermittel (3, 4) zum Speichern von den die sämtlichen Rosenkranzgesetze darstellenden Meldungen, wobei sich jede Meldung auf ein Rosenkranzgesetz bezieht;
ein Druckknopfmittel (5, 6; 15, 16), das zum weiteren Ausgeben von den die Rosenkranzgesetze darstellenden Meldungen von einem Gläubiger handgesteuert werden kann; und
ein Mikroprozessormittel (2), das mit den obengenannten Ausgabemittel, Speichermittel und Druckknopfmittel betriebsmässig verbunden und derart programmiert ist, daß das Ausgabemittel die die Rosenkranzgesetze darstellenden Meldungen in Reihenfolge nach der Ordnung der Rosenkranzgesetze durch aufeinanderfolgende, den Zugriff zum Speicher hervorbringende Betätigungen der Druckknopfmittel von dem Gläubiger ausgibt.

2. Netzbetriebenes Gerät zum Beten vom Rosenkranz nach Anspruch 1, dadurch gekennzeichnet, daß es einen Speicher mit wahlfreiem Zugriff weiter aufweist, der diejenige ein Rosenkranzgesetz darstellende Meldung dauernd speichert, die als letzte vor dem Ausschalten des Gerätes ausgegeben worden ist, wobei das Mikroprozessormittel (2) derat programmiert ist, daß das Ausgabemittel die ein Rosenkranzgesetz darstellende, als letzte ausgegebene Meldung als erste dann ausgibt, wenn das Gerät wieder eingeschaltet wird.

3. Netzbetriebenes Gerät zum Beten vom Rosenkranz nach Anspruch 1, dadurch gekennzeichnet, daß das Ausgabemittel ein Sichtgerät (7) ist.

4. Netzbetriebenes Gerät zum Beten vom Rosenkranz nach Anspruch 1, dadurch gekennzeichnet, daß das Ausgabemittel ein Sprachsynthetisiergerät ist.

5. Netzbetriebenes Gerät zum Beten vom Rosenkranz nach Anspruch 1, dadurch gekennzeichnet, daß das Sichtgerät ein alphanumerisches Sichtgerät ist.

6. Netzbetriebenes Gerät zum Beten vom Rosenkranz nach Anspruch 1, dadurch gekennzeichnet, daß das alphanumerische Sichtgerät ein Flüssigkristallsichtgerät ist.

7. Netzbetriebenes Gerät zum Beten vom Rosenkranz nach Anspruch 1, dadurch gekennzeichnet, daß das Sichtgerät ein graphisches Sichtgerät ist.

8. Netzbetriebenes Gerät zum Beten vom Rosenkranz nach Anspruch 1, dadurch gekennzeichnet, daß es eine mikroprozessorgesteuerte Reihe von zehn Photodioden (17), die die zehn Ave Maria anzeigen, sowie eine weitere mikroprozessorgesteuerte Reihe von drei Photodioden (17'), die die Gruppen von den Episoden aus dem Leben Christi bei denen Einschalten anzeigen, aufweist.

9. Netzbetriebenes Gerät zum Beten vom Rosenkranz nach Anspruch 1, dadurch gekennzeichnet, daß es ein mikroprozessorgesteuertes, religiöse Motive spielendes Ausgabemittel zur Begleitung der verschiedenen Rosenkranzgesetzte aufweist.

10. Netzbetriebenes Gerät zum Beten vom Rosenkranz nach Anspruch 9, dadurch gekennzeichnet, daß das die religiöse Motive spielende Ausgabemittel ein piezoelektrischer Umformer (8) ist.

## Revendications

1. Appareil de rosaire à énergie électrique, ayant des moyens pour allumer/éteindre le même,
caractérisé en ce qu'il comprend en combinaison:
des moyens de présentation (7; 17, 17') pour présenter un message identifiant de façon auto-explicative une étage de la prière du Rosaire, pour guider un fidèle à la recitation d'un étage de la prière du Rosaire;
des moyens de mémoire (3, 49) pour mémoriser des messages d'identification d'étage de la prière du Rosaire, chacun pour une respective étage de la prière du Rosaire, pour toutes les étages de la prière du Rosaire;
des moyens de touche (5, 6; 15, 16), contrôlable manuellement par un fidèle, pour faire avancer la présentation des dits messages d'identification d'étage de Rosaire, et
des moyens à microprocesseur (2), reliés opérativement aux dits moyens de présentation, moyens de mémoire et moyens de touche, programmés pour faire présenter par les dits moyens de présentation les dits messages d'identification de la prière du Rosaire de façon séquentielle, selon l'ordre des étages de la prière du Rosaire, sous activations successives des dits moyens de touche par le fidèle, en prélevant les mêmes des dits moyens de mémoire.

2. Appareil de rosaire à énergie électrique de la revendication 1, ultérieurement comprenant une mémoire à acces casual pour la mémorisation nonvolatile d'un message d'identification d'étage de la prière du Rosaire présenté le dernier avant d'éteindre l'appareil lui-même,
le dits moyens à microprocesseur (29) en étant programmés de telle façon que quand l'appareil est allumé à nouveau, il fait présenter ce message d'identification d'étage de la prière du Rosaire le premier par les dits moyens de présentation.

3. Appareil de rosaire à energie électrique de la revendication 1, dans lequel les dits moyens de présentation sont constitués d'un afficheur.

4. Appareil de rosaire à energie électrique de la revendication 1, dans lequel les dits moyens de présentation sont constitués d'un synthetisateur de voix.

5. Appareil de rosaire à energie électrique de la revendication 3, dans lequel les dits afficheur est un afficheur alphanumérique.

6. Appareil de rosaire à energie électrique de la revendication 5, dans lequel les dits afficheur alphanumérique est un afficheur à cristaux liquides.

7. Appareil de rosaire à energie électrique de la revendication 3, dans lequel les dits afficheur alphanumérique est un afficheur graphique.

8. Appareil de rosaire à energie électrique de la revendication 1,
ultérieurement comprenant
un group de dix diodes émettant lumiére (17) pour indiquer les dix Ave Maria et autres trois diodes émettant lumiére (17') pour indiquer le group des Mystères à leur allumage, sous contrôle des dits moyens à microprocesseur.

9. Appareil de rosaire à energie électrique de la revendication 1,
ultérieurement comprenant des moyens pour émettre des motifs réligieux musicaux en union avec les différentes étages individuelles de la prière du Rosaire, contrôlés par les dits moyens à microprocesseur.

10. Appareil de rosaire à energie électrique de la revendication 9, dans lequel les dits moyens pour émettre motifs réligieux musicaux sont constitués par un buzzer piézo-électrique (8)
